# EUROPÄISCHE PATENTSCHRIFT

(11) **EP 1 543 486 B1**
(45) Veröffentlichungstag und Bekanntmachung des Hinweises auf die Patenterteilung: **03.05.2006**
(21) Anmeldenummer: 03750372.9
(22) Anmeldetag: 23.09.2003
(51) Int. Cl.: G09B 27/08, H02N 15/00

(54) **GLOBUS**
GLOBE
GLOBE

(30) Priorität: 24.09.2002 DE 10244354
(43) Veröffentlichungstag der Anmeldung: 22.06.2005
(73) Patentinhaber: Pachler, Andreas, 82544 Egling (DE)
(72) Erfinder: Pachler, Andreas, 82544 Egling (DE)
(74) Vertreter: Zipse + Habersack
(86) Internationale Anmeldenummer: PCT/DE2003/003156
(87) Internationale Veröffentlichungsnummer: WO 2004/029912

(56) Entgegenhaltungen:
- EP-A- 0 549 912
- US-B1- 6 275 127
- US-B1- 6 373 676

## Beschreibung

Die Erfindung betrifft einen Globus mit einer kontaktfrei und magnetisch gehaltenen Globuskugel entsprechend dem Oberbegriff des Anspruchs 1 und ein Verfahren zum Steuern der Lage einer magnetisch gehaltenen Globuskugel in einer Globushalterung.

Bei derartigen Globen wird das Signal eines Magnetfeldsensors verwendet, um einen an der Globushalterung angeordneten Elektromagneten ein- und auszuschalten. Der Abstand wird dabei wie folgt gesteuert: Wesentlich für die freischwebende Halterung des Globuskugel im Magnetfeld ist der Permanentmagnet an der Oberseite der Globuskugel. Dieser tritt in Wechselwirkung mit dem oberhalb der Globuskugel angeordneten Elektromagneten an der Globushalterung. Kommt die Globuskugel zu nah an die Halterung, so zieht es die Globuskugel mittels des Permanentmagneten gegen den Elektromagneten, ob dieser nun angeschaltet ist oder nicht. Es gibt also einen gewissen kritischen Minimalwert für einen Abstand der Globuskugel von der Globushalterung, der nicht unterschritten werden darf, da ansonsten die Globuskugel gegen die Halterung gezogen wird. Der Hallsensor erkennt den Abstand der Globuskugel anhand des Magnetfeldes des Permanentmagneten. Das Anziehen der Globuskugel gegen die Halterung wird somit unterbunden indem der Elektromagnet abgeschaltet wird, bevor die oben genannte kritische Grenze erreicht wird, d. h. bevor ein kritischer Maximalwert für das Magnetfeld und ein entsprechendes Ausgangssignal des Magnetfeldsensors überschritten wird.

Andererseits muß dafür Sorge getragen werden, dass der Abstand der Globuskugel von der Halterung nicht zu groß wird, da in diesem Fall der mittlere Strom durch den Elektromagneten erhöht werden muß, was ein erhöhten Energiebedarf mit sich bringt und da andererseits ab einem gewissen Abstand die Kugel nicht mehr im Magnetfeld gehalten wird, sie somit herunterfällt. Ab einem gewissen kritischen Maximalabstand, der dadurch gekennzeichnet ist, dass ein gewisser Schwellenwert von dem Ausgangssignal des Magnetfeldsensors unterschritten wird, wird somit der Elektromagnet eingeschaltet. Der richtige Abstand der Globuskugel wird somit durch ständiges Ein- und Ausschalten, gesteuert durch das Ausgangssignal des Magnetfeldsensors, eingestellt. Diese Vorrichtung bzw. dieses Verfahren funktionieren einwandfrei bis auf Umstände, in welchen das System in Schwingung oder Eigenresonanz gerät. Eine derartige Eigenresonanz tritt auf zum Beispiel in Schwingungen von weniger als 5 Hz. Messungen haben ergeben, dass das Ausgangssignal des Magnetfeldsensors in derartigen Fällen keine Hilfe bietet, weil ein größerer Abstand des Elektromagneten der Globuskugel beim Hallsensor in der Regel durch ein stärkeres resultierendes Magnetfeld des Elektromagneten kompensiert wird. Die bekannten Globen nach dem Stand der Technik bieten somit keine ausreichende Sicherheit gegen Eigenresonanzen und Schwingungen aller Art.
Ein weiteres Problem besteht darin, dass durch die oben genannte Ein-/Aussteuerung des Elektromagneten die Kugel zwar in einer vergleichsweise sicheren Lage gehalten wird, die jedoch nicht zwangsläufig die energetisch günstigste Lage zu sein braucht. Es wurde so z. B. festgestellt, dass knapp unterhalb des kritischen Punktes, an welchem die Globuskugel an die Globushalterung gezogen wird der Energieverbrauch zum Halten der Globuskugel am geringsten ist. Die Globen nach dem Stand der Technik bieten keine Lösung, um die Globuskugel in einer bevorzugten Position zu halten. Prinzipiell ist es auch möglich, die Lage der Globuskugel anstelle oder zusätzlich zum Ein/Ausschalten auch analog über den Strom durch den Elektromagneten zu steuern bzw. regeln.

US 6373674 offenbart ein system zur kontaktfreien magnetischen Halterung von Objekten. Die Position des gehaltenen Objekts wird durch einen Microprosessor gesteuert.

Es ist daher Aufgabe der Erfindung, einen Globus und ein Verfahren zur Steuerung der Globuskugel in einer Globushalterung zu schaffen, die es wirksam ermöglichen, Schwingungen und Resonanzen zu unterbinden und es zum anderen ermöglichen, die Globuskugel mit einem geringen Energieaufwand sicher im Magnetfeld zu halten. Diese Aufgabe wird durch einen Globus gemäß Anspruch 1 und ein Verfahren gemäß Anspruch 7 gelöst. Vorteilhafte Weiterbildungen der Erfindung sind Gegenstand der zugehörigen Unteransprüche.

Die Erfindung berücksichtigt die seitens des Anmelders erlangte Erkenntnis, dass der Magnetfeldsensor, in der Regel ein Hallsensor, kein zufriedenstellendes Signal liefert, um Schwingungen und Resonanzen zu vermeiden. Der Anmelder hat hingegen festgestellt, dass Schwingungen der Kugel z. B. aufgrund von Resonanz sich in einer Änderung des Verhältnisses von Ein- zu Ausschaltezuständen des Elektromagneten widerspiegelt, wenn diese, verglichen mit der Resonanzfrequenz, über kürzere Messperioden von z. B. 1 bis 100 ms. vorzugsweise über 5 bis 50 ms. erfasst werden. Die Steuerung des Globus verwendet somit das seitens des Mikrocomputers bzw. Mikroprozessors erfasste Verhältnis von Ein- zu Ausschaltzuständen des Elektromagneten über wenigstens eine definierte Zeitspanne, um daraus Korrektursignale für die Ansteuerung des Elektromagneten abzuleiten.

Diese Basisidee der Erfindung ermöglicht, wie nachfolgend näher ausgeführt wird, sowohl die Unterdrückung von Schwingungen, insbesondere Resonanzen als auch die Einstellung der Globuskugel auf einen Idealabstand relativ zur Globushalterung.

Für die Realisierung der Erfindung ist es irrelevant, ob der Mikrocomputer einen Eingang hat, der mit den Ein-/Ausschaltsignalen einer Schalteinrichtung für den Elektromagneten beaufschlagt ist oder ob der Elektromagnet durch den Mikrocomputer selbst angesteuert wird, in welchem Fall selbstverständlich die Schaltzustände im Mikrocomputer selbst erfassbar sind.

In einer ersten Ausführungsform der Erfindung zur Unterdrückung von Resonanzschwingungen wird das Verhältnis von Ein- zu Ausschaltzuständen vorzugsweise über einen kürzeren Zeitraum von insbesondere 100 Mikrosekunden bis 500 Millisekunden, vorzugsweise 1 bis 50 Millisekunden erfaßt und in ein Register abgelegt. Anschließend wird das Verhältnis der Ein- und Ausschaltzustände in der nächste Periode gemessen und abgespeichert. Aus diesen wenigstens zwei Messungen wird die Änderung des Verhältnisses errechnet und diese Änderung als Basis für die Abgabe von Steuer- und Korrektursignalen für die Ansteuerung des Elektromagneten verwendet. Wenn z. B. die Änderung positiv ist, dass heißt das Verhältnis von Einzu Ausschaltzuständen aufeinanderfolgender Perioden zunimmt, so bedeutet dies, dass sich die Kugel von der Globushalterung entfernt und somit der Elektromagnet hochgefahren wird, um die Kugel wieder zurückzuholen. In diesem Fall können z. B. positive Korrektursignale abgegeben werden, d. h. das Verhältnis von Ein- zu Ausschaltzeiten überproportional hoch gefahren werden, um die Kugel stärker abzubremsen, als es eigentlich den vom Hallsensor abgegebenen Werten entspräche. Auf diese Weise wird der Abbau von Resonanzschwingungen sehr wirkungsvoll unterstützt. Andererseits kann, wenn über wenigstens zwei aufeinanderfolgenden Perioden eine negative Änderung des Ein- zu Ausschaltzustand Verhältnisses festgestellt wird, d.h. die Kugel sich hoch bewegt, die Einschaltzeit überproportional, d.h. stärker als es den entsprechenden Ausgangssignalen des Hall-Sensors entsprechen würde, reduziert werden, um auch hier den Aufbau einer Schwingung zu vermeiden. Selbstverständlich ist es in diesem Zusammenhang auch möglich, die Änderung über mehrere z. B. 5 bis 50 Perioden zu überwachen bzw. die zweite Ableitung d. h. die Änderung dieser Änderungen zeitlich aufeinanderfolgender Perioden als Ausgangsbasis für die Abgabe von Korrektursignal zu nutzen. In diesem Fall werden verstärkende Korrektur- bzw. Steuersignale vorzugsweise dann abgegeben, wenn die zweite Ableitung der Änderung der Korrektursignale positiv ist, d.h. also wenn eine Zunahme einer positiven Veränderung des Ein- zu Ausschaltverhältnisses festgestellt wird, oder falls eine positive Änderung der Verringerung des Ein- zu Ausschaltverhältnisses festgestellt wird.

Der Mikrocomputer hat vorzugsweise eine entsprechende Anzahl an Registern und/oder Zählern und eine Uhr, mit welcher eine getaktete Erfassung der Ein- und/oder Ausschaltzustände der Elektromagneten realisierbar ist, aus denen dann, aufsummiert über einen bestimmten Zeitraum, die Verhältnisse von Ein- zu Ausschaltzustand gebildet werden. Die Erfassung kann z. B. in einem zeitlichen Abstand von 10 bis 100 Mikrosekunden erfolgen, während die Verhältnisbildung eine Erfassung von 10 bis 1000 Erfassungstakten berücksichtigen kann.

Des weiteren kann durch die Erfindung der Stromverbrauch für den Globus minimiert werden, in dem das zeitliche Verhältnis von Ein- zu Ausschaltzuständen des Elektromagneten über einen längeren Zeitraum von z. B. 500 Millisekunden bis mehrere Sekunden erfaßt und gemittelt wird, und dieser Mittelwert mit einem Referenzsollwert eines Ein- zu Ausschaltverhältnisses verglichen wird, der für einen idealen Abstand der Globuskugel von der Globushalterung steht. Dieses ideale Referenzverhältnis entspricht einem gewissen idealen mittleren Strom durch den Elektromagneten, der einen entsprechenden idealen Abstand der Globuskugel ein wenig unterhalb des Anziehungspunktes bewirkt. Das aktuelle Verhältnis wird in Richtung auf das Referenzverhältnis verändert, so dass die Globuskugel im Mittel auf die unter Energiegesichtspunkten ideale Lage zusteuert. Dies ist verbunden mit einem geringeren Energieverbrauch mit einer entsprechend geringeren Aufheizung des Elektromagneten.

Es versteht sich, dass technische Elemente der Erfindung einzeln oder mehrfach vorhanden sein können, wenn dieses technisch sinnvoll erscheint. Es soll weiterhin klargestellt sein, dass die elektrische Ansteuerung des Elektromagneten und der Mikroprozessor in unterschiedlichen Elementen oder in einer integrierten Einheit ausgebildet sein können. Vorzugsweise enthält der Mikroprozessor die gesamte Ansteuerung für den Elektromagneten und hat als Eingangsport lediglich dass digitalisierte Ausgangssignal des Magnetfeldsensors, dass vorher in einem AD-Wandler konvertiert wurde.

Selbstverständlich kann die Basisschaltung auch analog ausgelegt sein, in welchem Fall der zeitliche Verlauf des Stroms durch den Elektromagneten bzw. die daran anliegende Spannung erfasst, und daraus Steuer- bzw. Korrektursignale für die Steuerung des Elektromagneten abgeleitet werden. Die Steuerung kann in diesem Fall über das Verhältnis der Ein- und Ausschaltzustände als auch über den Strom durch den Elektromagneten erfolgen.
Die generelle Lage kann dabei allein über eine Stromsteuerung/Spannungssteuerung am Elektromagneten oder durch eine kombinierte Steuerung über Ein/Ausschaltzeiten als auch Stromstärke durch den Elektromagneten. Hierbei kann z.B. die Grundsteuerung über die Ein- und Ausschaltzustände und die Korrektursteuerung zur Vermeidung von Schwingungen bzw. zum Erreichen des optimalen Abstandes über die Stromstärke realisiert werden.
Als Magnetfeldsensor können alle bislang bekannten oder zukünftigen Sensoren verwendet werden, wobei eine richtungsabhängige Magnetfelderkennung bevorzugt wird. Derzeit sind an Magnetfeldsensoren Hallsensoren die gebräuchlichsten.

Der Erfindung wird nachfolgend beispielsweise in der schematischen Zeichnung beschrieben.

In dieser zeigen:
- Figur 1: eine schematische Seitenansicht eines Globus mit freischwebender Kugel,
- Figur 2: ein Diagramm mit dem zeitlichen Verlauf des Verhältnisses der Ein- zu Ausschaltzustände im Fall einer Resonanzschwingung der Globuskugel, und
- Figur 3: eine erfindungsgemäße Schaltung zur Unterdrückung von Resonanzen und zur optimalen Abstandsteuerung gemäß der Erfindung.

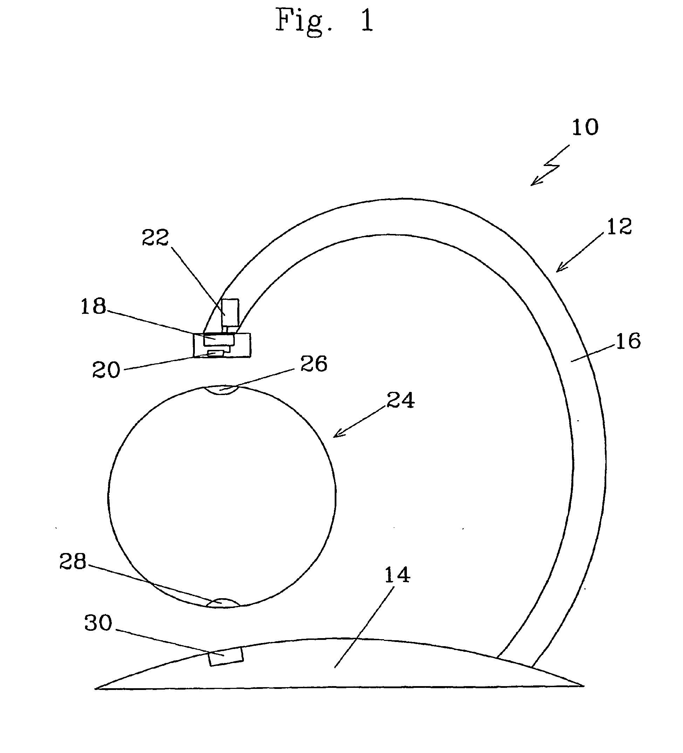

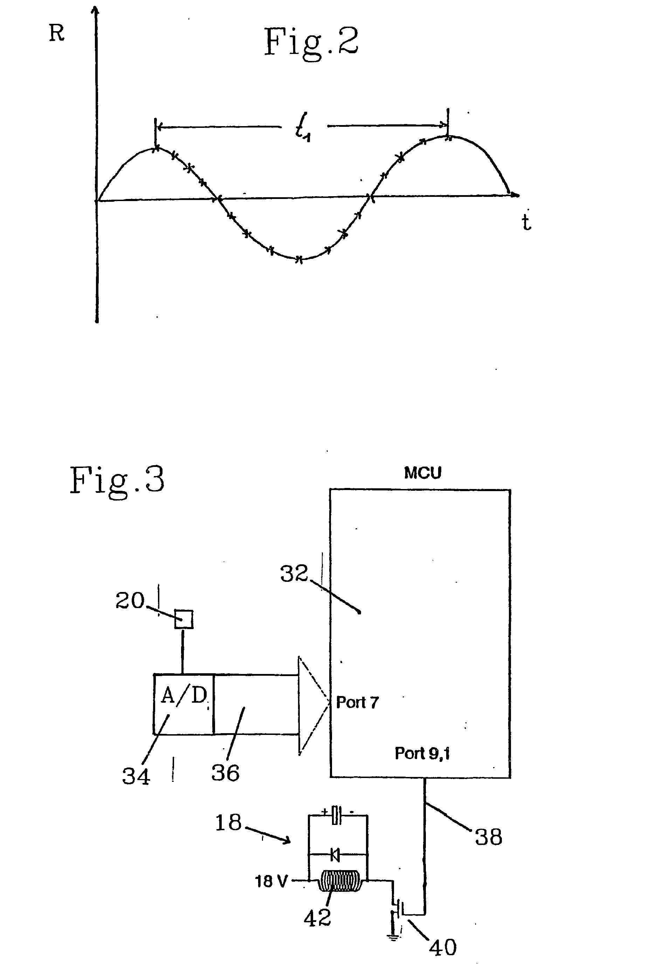

Figur 1 zeigt einen Globus 10 mit einer Globushalterung 12, die eine Bodenplatte 14 und einen daran angebrachten vertikalen bogenförmigen Ständer 16 umfaßt. Am freien Ende des Ständers 16 sind ein Elektromagnet 18, ein Hallsensor 20 und eine elektrische Steuerung 22 angeordnet. Die Steuerung kann auch an einer anderen Stelle der Globushalterung, z. B. im Fuß 14 angeordnet sein, zum Beispiel in Verbindung mit einem Ein- Ausschalter. Unter dem Elektromagneten wird eine Globuskugel 24 freischwebend gehalten, die an ihrer dem Elektromagneten 18 zugewandten Oberseite einen Permanentmagneten 26 aufweist. An der Unterseite hat die Globuskugel 24 einen zweiten Permanentmagneten 28, der jedoch nur dafür vorgesehen ist, von einem am Fuß 14 der Globushalterung 12 vorgesehenen dritten Permanentmagneten 30 gehalten zu werden, falls die Globuskugel 24 herunterfällt, so dass diese nicht von der Bodenplatte 14 wegrollt und eventuell beschädigt wird. Durch den Hallsensor 20 wird detektiert, wenn ein Permanentmagnet 26 der Globuskugel 24 in den Bereich des Elektromagneten 18 gelangt. In diesem Fall wird die Haltesteuerung umfassend der Elektromagneten 18, in Hallsensor 20 und eine elektronische Steuerung 22 mit einem Mikroprozessor oder Mikrocomputer aktiviert. Der Halldetektor liefert ständig ein Ausgangssignal an die Steuerung 22, welches representativ für den Abstand des Permanentmagneten 26 vom Elektromagneten 18 ist. Kommt der Permanentmagnet 26 und damit die Globuskugel dem Elektromagneten 18 zu nahe, so schaltet die Steuerung 22 den Elektromagneten ab. Daraufhin fällt die Globuskugel etwas nach unten solange bis ein gewisser zweiter Schwellenwert durch das Ausgangssignal des Hallsensors 20 unterschritten wird, was der Steuerung 22 wiederum anzeigt, dass der Elektromagnet wieder eingeschaltet werden muß. Dann wird die Globuskugel wieder nach oben gezogen bis sie wieder in den Bereich des ersten Schwellenwerts gelangt, wo wiederum der Elektromagnet abgeschaltet wird. Dieses Ein- und Ausschalten des Elektromagnets vollzieht sich in einer Frequenz von mehreren Kiloherz z. B. 5 bis 10 Kiloherz. Falls die Globuskugel, zum Beispiel im Laufe des Einführens in den Aktivitätsbereich der Vorrichtung oder z. B. aufgrund von Wind oder anderer Ursachen in eine vertikale Schwingung gerät, ändert sich das Verhältnis der Einschaltzeiten zu den Ausschaltzeiten im Rahmen einer Schwingungsperiode t₁ von etwa beispielsweise 100 Millisekunden, wie es in Figur 2 wiedergegeben ist. In Figur 2 ist das Verhältnis der Ein- zu Ausschaltzustände über die Zeit dargestellt. Es ergibt sich bei einer Resonanzschwingung der Globuskugel ein sinusförmiger Verlauf des Verhältnisses der Ein- zu Ausschaltzustände des Elektromagneten.

Die Kurve wird wie folgt erhalten. Für eine gewisse kurze Zeitperiode von etwa beispielsweise 5 bis 15 Millisekunden, was in etwa dem Abstand zweier Kreuze in dem Diagramm der Fig. 2entspricht, werden in einem Register oder in separaten Registern die Ein- bzw. Ausschaltzustände während jedes Erfassungstaktes des Mikroprozessors aufsummiert. Wenn der Mikroprozessor z. B. alle 25 Mikrosekunden einmal den Ein-/Ausschaltzustand des Elektromagneten erfaßt, so werden in 10 Millisekunden 40 Messungen erfaßt. In diesen 40 Messungen können z. B. sowohl die Ein- als auch die Ausschaltzustände in separaten Registern gezählt und anschließend ins Verhältnis gesetzt werden oder es werden die Ein- als auch Ausschaltzustände in einem Register additiv zusammengezählt, wodurch am Ende ein negativer oder positiver Wert herauskommt, der Informationen über das Verhältnis von Ein- und Ausschaltzuständen enthält. Im Verlauf einer derartigen Schwingung, wie sie in Figur 2 gezeigt ist, ändert sich nun das in oben beschriebener Weise ermittelte Verhältnis von Ein- zu Ausschaltzuständen, wobei die Änderung des Verhältnisses oder sogar die zweite Ableitung, d. h. die Zunahme oder Abnahme der Änderung des Verhältnisses als Basis für die Abgabe eines Korrekturwertes verwendet werden kann. Durch die Verwertung dieser zeitlichen Änderungen bzw. zweiten Ableitungen in herkömmlichen Steuerprogrammen kann der Schwingungen entgegengewirkt werden, z. B. durch ein gegenwirkendes Verändern der Ein- zu Ausschaltzeiten gegen Ende der Schwingungen, d. h. in Figur 2 in den oberen und unteren Umkehrbereichen der Kurve, welche Schwingungsbereiche auch der Auf- und Abschwingung der Kugel selbst entsprechen. Durch Verwendung des sehr aussagekräftigen Verhältnisses der Ein- zu Ausschaltzustände des Elelctromagneten kann somit durch herkömmliche Steuerung und Regelalgorithmen der Aufbau von Schwingungen wirksam unterbunden werden.

In gleicher Weise kann das Verhältnis R der Ein- zu Ausschaltzeiten auch über einen längeren Zeitraum von z. B. 1 bis 10 Sekunden erfaßt und gemittelt werden und mit einem Referenzwert verglichen werden, der sozusagen für eine optimale Lage der Globuskugel dicht unterhalb des Anziehungspunktes liegt, an welchem die Globuskugel unaufhaltsam gegen den Elektromagneten 18 gezogen wird. In diesem optimalen vertikalen Level der Globuskugel wird am wenigsten Energie verbraucht. Durch herkömmliche Steuerungsalgorithmen kann somit das aktuelle Verhältnis der Ein- zu Ausschaltzeiten in Richtung auf den als Referenzwert gespeicherten Idealwert geändert werden.

Eine Schaltung mit der Steuerung und den anderen elektrischen Komponenten des Globus ist in Figur 3 wiedergegeben. Zur Steuerung dient ein Mikroprozessor 32. Der in Figur 1 dargestellte Hallsensor 20 liefert sein Ausgangssignal an einen AD-Wandler 34, dessen digitales Ausgangssignal 36 dem Mikroprozessor bzw. Mikrocomputer 32 zugeführt wird. Der Mikroprozessor 32 steuert in Abhängigkeit von dem Ausgangssignal des Hallsensors 20 die Ein- und Ausschaltzeit des Elektromagneten 18 über eine Steuerleitung 38, die auf die Basis eines elektronischen Schalters 40 z. B. Transistors geführt ist. Der Transistor steuert dann die Spule 42 an, die in einem Resonanzkreis des Elektromagneten 18 liegt.

Der Mikroprozessor enthält außerdem eine nicht dargestellte Uhr und wenigstens ein Register oder Zähler, in welchem mit jedem Takt, z. B. im Abstand von 25 Mikrosekunden die Schaltzustände an der Steuerleitung 38 erfaßt werden. Der Mikroprozessor erhält somit nach einer Anzahl von Takten, z. B. nach 10 Millisekunden eine Anzahl von z. B. 40 Messungen, die aufgrund der erfaßten Schaltzustände einen Wert für das Verhältnis von Ein- zu Ausschaltzeiten des Elektromagneten wiedergeben. Dieser Wert wird von dem Mikroprozessor verwendet, um Schwingungen entgegenzuwirken und die Globuskugel in bereits genannter Weise auf einen optimalen Abstand zu halten.

## Patentansprüche

1. Globus mit einer kontaktfrei und magnetisch gehaltenen Globuskugel (24), deren Lage über einen an der Kugel angeordneten Permanentmagneten (26) frei schwebend gehalten wird, der mit einem in Verbindung mit einer Globushalterung (12) oberhalb der Kugel angeordneten Elektromagneten (18) wechselwirkt,
mit einer elektrischen Steuerung (22) für den Elektromagneten, die eingangsseitig mit einem Magnetfeldsensor (20), insbesondere einer Hall-Sonde, verbunden ist, und die die Lage der Globuskugel über Ein- und Ausschalten des Elektromagneten bzw. durch Steuerung des Stroms durch den Elektromagneten in Abhängigkeit von den Ausgangssignalen des Magnetfeldsensors steuert,
**dadurch gekennzeichnet,**
**dass** ein Mikrocomputer(32) vorgesehen ist, dem das Ausgangssignal des Magnetfeldsensors zugeführt wird,
**dass** der Mikrocomputer wenigstens einen Speicher/Zähler zur Erfassung von Ein- und Ausschaltzuständen oder eine Vorrichtung zur Erfassung des Stroms durch bzw. der Spannung an den/m Elektromagneten über wenigstens einen definierten Zeitraum aufweist, und dass der Globus eine Schalt- oder Steuereinrichtung aufweist, die das Verhältnis von Einzu Ausschaltzuständen des Elektromagneten oder den Strom durch /die Spannung an dem Elektromagneten in Abhängigkeit von dem zeitlichen Verlauf der vom Mikrocomputer erfassten Ein/Ausschaltzustände bzw. des gemessenen Stroms/Spannung beeinflusst.

2. Globus nach Anspruch 1, **dadurch gekennzeichnet, dass** der Mikrocomputer (32) wenigstens einen Speicher, der die Ein/Ausschaltzustände über einen längeren Zeitraum von mindestens 10 ms, vorzugsweise 500 ms bis 5 s erfasst und einen Referenzwertspeicher aufweist für die Speicherung eines Referenzverhältnisses von Ein- zu Ausschaltzuständen, und dass der Globus eine Steuerung und/oder Schalteinrichtung aufweist, mit der das aktuelle Verhältnis von Ein- zu Ausschaltzuständen des Elektromagneten in Richtung auf den Referenzwert beeinflussbar ist.

3. Globus nach Anspruch 1 oder 2,
**dadurch gekennzeichnet, dass** ein Speicher /Zähler die Ein- und Ausschaltzustände über einen kürzeren Zeitraum von z.B. 1 bis 100 ms, vorzugsweise 5 bis 50 ms erfasst und eine Vergleichsschaltung oder Subtraktionsschaltung vorgesehen ist, die die Änderung des Verhältnisses von Ein- zu Ausschaltzustand gegenüber vorherigen Messungen erfasst, und dass der Globus eine Steuerung und/oder Schalteinrichtung aufweist, mit der das aktuelle Verhältnis von Ein- zu Ausschaltzuständen des Elektromagneten zur Verstärkung/Verringerung der Änderung beeinflussbar ist.

4. Globus nach einem der vorhergehenden Ansprüche, **dadurch gekennzeichnet, dass** ein A/D-Wandler (34) für eine Digitalisierung des Ausgangssignals des Magnetfeldsensors (20) als Eingangssignal für den Mikrocomputer (32) vorgesehen ist.

5. Globus nach einem der vorhergehenden Ansprüche,
**dadurch gekennzeichnet, dass** die Steuerung (22) einen Schalter umfasst, um den Elektromagneten abzuschalten, falls das Ausgangssignal des Magnetfeldsensors einen vorgegebenen Wert unterschreitet.

6. Globus nach einem der vorhergehenden Ansprüche,
**dadurch gekennzeichnet, dass** die Steuerung (22) einen Schalter umfasst, um den Elektromagneten einzuschalten, falls das Ausgangssignal des Magnetfeldsensors einen gewissen Wert überschreitet.

7. Verfahren zur Steuerung der Lage einer Globuskugel (24), die frei schwebend in einer Globushalterung (12) gehalten wird, unter Verwendung eines in Verbindung mit der Kugel angeordneten Permanentmagneten (26), der mit einem oberhalb der Kugel in Verbindung mit der Globushalterung angeordneten Elektromagneten (18) wechselwirkt,
mit einer elektrischen Steuerung (22) für den Elektromagneten, die eingangsseitig mit einem Magnetfeldsensor (20), insbesondere einer Hall-Sonde, verbunden ist, um den Abstand des Permanentmagneten von dem Elektromagneten zu detektieren, und die die Lage der Globuskugel über Ein- und Ausschalten des Elektromagneten bzw. über die Steuerung des Stroms durch/der Spannung an dem Elektromagneten in Abhängigkeit von den Ausgangssignalen des Magnetfeldsensors steuert,
**dadurch gekennzeichnet, dass** die Ein- und Ausschaltzustände des Elektromagneten bzw. der Strom durch/die Spannung an dem Elektromagneten erfasst, und aus dem Wert des Verhältnisses der Ein- zu Ausschaltzustände bzw. dem Strom- oder Spannungsverlauf oder dessen Änderung ein Steuer- oder Korrektursignal für die Ansteuerung des Elektromagneten abgeleitet wird.

8. Verfahren nach Anspruch 7, **dadurch gekennzeichnet, dass** das aktuelle Verhältnis mit einem Referenzwert für ein Sollverhältnis von Ein- zu Ausschaltzeit des Elektromagneten verglichen, und daraus ein Korrektur- und/oder Steuersignal für den Elektromagneten abgeleitet wird.

9. Verfahren nach Anspruch 7 oder 8, **dadurch gekennzeichnet, dass** die Änderungen wenigstens zweier aufeinander folgender Messungen des Verhältnisses zur Ableitung eines Korrektur- und/oder Steuersignals für den Elektromagneten verwendet werden.

10. Verfahren nach einem der Ansprüche 7 bis 9,
**dadurch gekennzeichnet, dass** der Elektromagnet abgeschaltet wird, falls das Ausgangssignal des Magnetfeldsensors einen ersten Schwellenwert unterschreitet.

11. Verfahren nach einem der Ansprüche 7 bis 9,
**dadurch gekennzeichnet, dass** der Elektromagneten eingeschaltet wird, falls das Ausgangssignal des Magnetfeldsensors einen Schwellenwert überschreitet.

## Claims

1. A globe comprising
a globe sphere (24) suspended contactless and magnetically, whose position is maintained levitated via a permanent magnet (26) mounted on said sphere, interacting with an electromagnet (18) arranged in connection with a globe support (12) above said sphere,
an electrical controller (22) for said electromagnet and connected at its input end to a magnetic field sensor (20), particularly a Hall effect sensor, and which controls the position of said globe sphere by energizing/deenergizing said electromagnet or by controlling the current flow through said electromagnet as a function of the output signals of said magnetic field sensor,
**characterized in that**
a microcomputer (32) is provided, receiving the output signal of said magnetic field sensor,
said microcontroller comprises at least one register/counter for sensing the energized/deenergized status and/or a device for sensing the current flow through, or the voltage at, said electromagnet over at least one defined time period, and that
said globe comprises a switching/control means for influencing the duty cycle of said electromagnet and/or said current flow through, said voltage at, said electromagnet as a function of the time profile of each energized/deenergized status sensed by said microcontroller and/or said sensed current flow/voltage.

2. The globe as set forth in claim 1, **characterized in that** said microcomputer (32) comprises at least one memory sensing each energized/deenergized status over a lengthy time period of at least 10 ms, preferably 500 ms to 5 s, and a reference value menory for storing a reference duty cycle and that said globe comprises a controlling and/or switching means with which the actual duty cycle of said electromagnet can be influenced in the direction of said reference value.

3. The globe as set forth in claim 1 or 2, **characterized in that** a memory/counter senses each energized/deenergized status over a shorter time period of e.g. 1 to 100 ms, preferably 5 to 50 ms and a comparison circuit or subtraction circuit is provided which senses the change in said duty cycle as compared to previous sensings, and that said globe comprises a controlling and/or switching means with which said actual duty cycle of said electromagnet can be influenced to boost/reduce said change.

4. The globe as set forth in any of the preceding claims, **characterized in that** an analog/digital converter (34) is provided for digitizing the output signal of said magnetic field sensor (20) as the input signal for said microcomputer (32).

5. The globe as set forth in any of the preceding claims, **characterized in that** said controller (22) comprises a switch for deenergizing said electromagnet as soon as the output signal of said magnetic field sensor drops below a predefined value.

6. The globe as set forth in any of the preceding claims, **characterized in that** said controller (22) comprises a switch for energizing said electromagnet as soon as the output signal of said magnetic field sensor exceeds a predefined value.

7. A method of controlling the position of a globe sphere (24) suspended levitated in a globe support (12) in making use of a permanent magnet (26) in connection with said sphere and interacting with an electromagnet (18) arranged in connection with said globe support above said sphere, comprising
an electrical controller (22) for said electromagnet connected at its input end to a magnetic field sensor (20), particularly a Hall effect sensor,for detecting the spacing of said permanent magnet from said electromagnet, and to control the position of said globe sphere by energizing/deenergizing said electromagnet or by controlling the current flow through said electromagnet as a function of the output signals of said magnetic field sensor,
**characterized in that**
each energized/deenergized status of said electromagnet or the current flow through/voltage at said electromagnet is sensed and that from the value of the duty cycle or current or voltage profile or change thereof a signal is derived for controlling and/or correcting activation of said electromagnet.

8. The method as set forth in claim 7, **characterized in that** said actual duty cycle is compared to a reference value for the wanted duty cycle of said electromagnet from which a signal is derived for controlling and/or correcting said electromagnet.

9. The method as set forth in claim 7 or 8, **characterized in that** the changes in at least two sensings in sequence of said duty cycle are used for deriving a signal for controlling and/or correcting said electromagnet.

10. The method as set forth in any of the claims 7 to 9, **characterized in that** said electromagnet is deenergized as soon as the output signal of said magnetic field sensor falls below a first threshold value.

11. The method as set forth in any of the claims 7 to 9, **characterized in that** said electromagnet is energized as soon as the output signal of said magnetic field sensor exceeds a threshold value.

## Revendications

1. Globe avec une boule (24) tenue de façon magnétique et sans contact dont la position est maintenue de façon flottante par un aimant permanent (26) disposé sur la boule, se trouvant en interaction avec un électroaimant (18) disposé en relation avec un support de globe (12) au-dessus de la boule,
avec une commande électrique (22) pour l'électroaimant, qui est raccordée côté entrée à un capteur de champ magnétique (20), en particulier un capteur à effet Hall, et qui commande la position du globe par la mise sous tension/hors tension de l'électroaimant ou par le contrôle du courant traversant l'électroaimant en fonction des signaux de sortie du capteur
de champ magnétique,
**caractérisé par le fait**
**qu'**un micro-ordinateur (32) est prévu auquel est connecté le signal de sortie du capteur de champ magnétique,
**que** le micro-ordinateur présente au moins une mémoire/un compteur pour la saisie des états marche/arrêt ou un dispositif de saisie du courant traversant ou de la tension aux bornes de l'électroaimant/des électroaimants sur au moins une période définie, et que le globe présente un dispositif de commutation ou de commande influençant le rapport entre les états marche/arrêt de l'électroaimant ou le courant traversant/la tension aux bornes de l'électroaimant en fonction de l'évolution dans le temps des états marche/arrêt saisis par le micro-ordinateur ou du courant/de la tension mesurée.

2. Globe selon la revendication 1,
**caractérisé par le fait que** le micro-ordinateur (32) présente au moins une mémoire saisissant les états marche/arrêt sur une assez longue période d'au moins 10 ms, préférentiellement de 500 ms à 5 s et une mémoire de valeur de référence pour le stockage d'un rapport de référence des états marche/arrêt, et que le globe présente une commande et/ou un dispositif de commutation, avec lequel le rapport actuel des états marche/arrêt de l'électroaimant est influençable dans la direction de la valeur de référence.

3. Globe selon la revendication 1 ou 2,
**caractérisé par le fait qu'**une mémoire/un compteur saisit les états marche/arrêt sur une assez courte période de p. ex. 1 à 100 ms, préférentiellement de 5 à 50 ms et qu'un circuit de comparaison ou de soustraction est prévu pour saisir la modification du rapport entre les états marche/arrêt par rapport à des mesures précédentes, et que le globe présente une commande et/ou un dispositif de commutation, grâce auquel le rapport actuel entre les états marche/arrêt de l'électroaimant peut être modifié pour le renforcement/la diminution de la modification.

4. Globe selon l'une des revendications précédentes,
**caractérisé par le fait qu'**un convertisseur analogique/numérique (34) est prévu pour une numérisation du signal de sortie du capteur de champ magnétique (20) comme signal d'entrée pour le micro-ordinateur (32).

5. Globe selon l'une des revendications précédentes,
**caractérisé par le fait que** la commande (22) comprend un commutateur, pour mettre l'électroaimant hors tension, dans le cas où le signal de sortie du capteur de champ magnétique descend au-dessous d'une valeur définie.

6. Globe selon l'une des revendications précédentes,
**caractérisé par le fait que** la commande (22) comprend un commutateur, pour mettre l'électroaimant sous tension, dans le cas où le signal de sortie du capteur de champ magnétique dépasse une certaine valeur.

7. Procédé de commande de la position d'un globe (24) flottant dans un support de globe (12), au moyen d'un aimant permanent (26) disposé en contact avec la boule et en interaction avec un électroaimant (18) disposé au-dessus de la boule en contact avec le support du globe,
avec une commande électrique (22) pour l'électroaimant, qui est raccordée côté entrée à un capteur de champ magnétique (20), en particulier un capteur à effet Hall, pour détecter la distance entre l'aimant permanent et l'électroaimant, et qui commande la position du globe par la mise sous tension/hors tension de l'électroaimant ou par le contrôle du courant traversant/de la tension aux bornes de l'électroaimant en fonction des signaux de sortie du capteur de champ magnétique,
**caractérisé par le fait que** les états marche/arrêt de l'électroaimant ou le courant traversant/la tension aux bornes de l'électroaimant sont saisis, et qu'à partir de la valeur du rapport des états marche/arrêt ou de l'évolution du courant ou de la tension ou de la modification de cette évolution un signal de commande ou de correction pour la commande de l'électroaimant est déduit.

8. Procédé selon la revendication 7,
**caractérisé par le fait que** le rapport actuel est comparé à une valeur de référence d'une consigne de rapport entre les états marche/arrêt de l'électroaimant, et qu'un signal de correction et/ou de commande en est déduit pour l'électroaimant.

9. Procédé selon la revendication 7 ou 8,
**caractérisé par le fait que** les modifications d'au moins deux mesures consécutives du rapport sont utilisées pour déduire un signal de correction et/ou de commande pour l'électroaimant.

10. Procédé selon une des revendications 7 à 9,
**caractérisé par le fait que** l'électroaimant est mis hors tension dans le cas où le signal de sortie du capteur de champ magnétique descend au-dessous d'une première valeur de seuil.

11. Procédé selon une des revendications 7 à 9,
**caractérisé par le fait que** l'électroaimant est mis sous tension dans le cas où le signal de sortie du capteur de champ magnétique dépasse une valeur de seuil.
